# EUROPEAN PATENT SPECIFICATION

(11) **EP 3 849 155 B1**
(45) Date of publication and mention of the grant of the patent: **17.07.2024**
(21) Application number: 20180703.9
(22) Date of filing: 18.06.2020
(51) Int. Cl.: H04L 67/125, H04L 12/28

(54) **IOT-BASED HOME DEVICE MANAGEMENT**
IOT-BASIERTE VERWALTUNG VON HEIMGERÄTEN
GESTION DES APPAREILS DOMESTIQUES BASÉE SUR L'IOT

(30) Priority: 08.01.2020 CN 202010019016
(43) Date of publication of application: 14.07.2021
(73) Proprietor: Beijing Xiaomi Mobile Software Co., Ltd., Beijing 100085 (CN)
(72) Inventor: WEI, Liang, Haidian District, Beijing 100085 (CN); TANG, Jianfeng, Haidian District, Beijing 100085 (CN)
(74) Representative: Gevers Patents

(56) References cited:
- EP-A1- 3 070 557
- CN-A- 108 449 241
- US-A1- 2003 040 812
- US-A1- 2016 088 710

## Description

### TECHNICAL FIELD

The present disclosure generally relates to the technical field of electronics, and more particularly, to a method and device for processing data and a storage medium. The related art can be known from EP3070557A1, US2016088710A1, CN10844924A and US2003/040812A1.

### BACKGROUND

The Internet of things is an important part of the new generation of information technologies as well as an important development stage of the "information" age. As the name suggests, the Internet of things is an Internet connecting things. This has two meanings: first, the core and foundation of the Internet of things are still the Internet, and it is a network extended and expanded based on the Internet; and second, users are extended and expanded to information exchange and communication between any things, namely the things are associated. The Internet of things is widely applied to network convergence through communication sensing technologies such as intelligent sensing, a recognition technology and pervasive computing, and thus is also called a third wave of development of the world information industry after computer and Internet.

Based on the development of Internet of things technologies, various intelligent devices have emerged. Popularization of intelligent devices brings great convenience to people's lives.

### SUMMARY

The invention is set out in the appended set of claims.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a first flow chart showing a method for processing data, according to an embodiment of the present disclosure.
FIG. 2 is a second flow chart showing a method for processing data, according to an embodiment of the present disclosure.
FIG. 3 is an interaction flow chart showing a method for processing data, not being part of the invention.
FIG. 4 is a first diagram of a device for processing data, according to an exemplary embodiment.
FIG. 5 is a second diagram of a device for processing data, according to an exemplary embodiment.
FIG. 6 is a block diagram of a control device, not being part of the invention.
FIG. 7 is a block diagram of a controlled device, not being part of the invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims. The embodiments not covered by the appended claims are not according to the invention and are present for illustration purposes only.

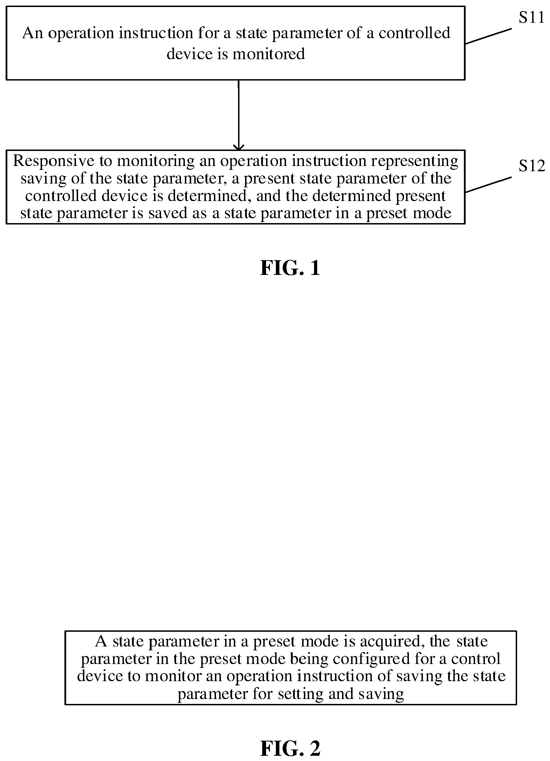

FIG. 1 is a first flow chart showing a method for processing data, according to an embodiment of the present disclosure. The method for processing data is applied to a control device, and as illustrated in FIG. 1, includes the following steps.

In S11, an operation instruction for a state parameter of a controlled device is monitored.

In S12, responsive to monitoring an operation instruction representing saving of the state parameter, a present state parameter of the controlled device is determined, and the determined present state parameter is saved as a state parameter in a preset mode.

In the embodiment of the present disclosure, the control device refers to a terminal device that may control another Internet of things device, for example, a smart phone or an intelligent speaker. The controlled device refers to an intelligent home device capable of receiving a control instruction of the control device, for example, an intelligent television and an intelligent air conditioner.

The control device may communicate with the controlled device based on a wireless communication manner or a wired communication manner. The wireless communication manner includes a communication manner based on Wireless Fidelity (Wi-Fi), Bluetooth (BT) and ZigBee, etc. The wired communication manner includes a Universal Serial Bus (USB)-based communication manner. A communication manner between the control device and the controlled device is not specifically limited in the embodiment of the present disclosure.

It should be noted that, in the embodiment of the present disclosure, that the control device acquires the state parameter of the controlled device includes that the control device acquires the state parameter of the controlled device based on communication with the controlled device. For example, the state parameter reported by the controlled device is acquired in the BT communication manner. That the control device acquires the state parameter of the controlled device further includes that the control device acquires the state parameter of the controlled device from a server. For example, a mobile terminal acquires the state parameter of the controlled device from the server connected with the controlled device in the Wi-Fi-based communication manner. That the control device acquires the state parameter of the controlled device further includes that the control device directly sets the state parameter of the controlled device. For example, the state parameter is sent to the controlled device in the BT communication manner to enable the controlled device to work in a corresponding state.

In the embodiment of the present disclosure, there may be one or more controlled devices. If there are a plurality of controlled devices, when the control device monitors the operation instruction from a user of saving the state parameter, present state parameters of the plurality of controlled device are saved together as the state parameters in the preset mode.

It should be noted that, in the embodiment of the present disclosure, the state parameter of the controlled device refers to a state parameter of the controlled device in a present working state. The state parameter includes, but not limited to, a temperature parameter, a volume parameter, a humidity parameter and the like, and the user may immediately perceive the present working state of the controlled device. When the user perceive that the present working state of the controlled device is an expected state, the control device monitors the operation instruction of saving the state parameter of the controlled device from the user and save the determined present state parameter as the state parameter in the preset mode, to implement mode recording of the controlled device.

A management Application (APP) for managing the controlled device is installed in the control device. The control device may determine a state parameter of the expected state configured for the controlled device based on a click operation of the user over a "save" control in the management APP or in a manner of receiving a voice control instruction of the user. The state parameter of the expected state is the state parameter in the preset mode.

It should be noted that, in some embodiments, when a plurality of controlled devices in an association relationship are configured in a mode, the operation instruction of saving the state parameter may be a common saving instruction for all state parameters of respective controlled devices. Therefore, responsive to monitoring a saving instruction, state parameters of expected states of the plurality of controlled devices may be configured.

In some other embodiments, when a plurality of controlled devices in an association relationship are configured in a mode, state parameters of respective controlled devices may be determined one by one for a saving instruction. In the embodiment of the present disclosure, the control device is, for example, a mobile phone, and a home device management APP is installed in the mobile terminal. When the user expects to configure a working state for an intelligent device, for example, a preset mode of a "home mode" is recorded, an intelligent television, intelligent lamp, intelligent curtain, air purifier and intelligent air conditioner to be managed may be turned on, and each intelligent device is manually operated step by step to set each intelligent device to work in expected states according to a real-time feeling of the user. For example, the intelligent curtain is manually set to work in a mode that transmittance is 50%, and the intelligent air conditioner is manually set to work in a mode of 26 DEG C. The home device management APP in the mobile terminal may receive state parameters of present states of these intelligent devices and save the state parameters of respective intelligent devices to complete recording of the "home mode".

In an embodiment, responsive to monitoring an operation instruction representing setting of the state parameter of the controlled device, the state parameter, indicated by the operation instruction representing setting, of the controlled device in the preset mode is determined; and

the determined state parameter is sent to the controlled device, and a working state of the controlled device is set.

In the embodiment, the controlled device may be controlled based on the state parameter, saved in the control device, belonging to the controlled device in the preset mode to work with the state parameter in the preset mode, such that the working state of the controlled device may be controlled.

Based on recording of the "home mode" by the control device, when the user returns home, the "home mode" may be triggered in the control device, and the state parameter in the "home mode" is sent to the corresponding controlled device, such that the control device may control the working state of the controlled device according to the state parameter in the "home mode".

For example, the controlled device is an intelligent home device. In the "home mode", the user, after returning home, may turn on the "home mode" based on the control device. The intelligent curtain is set to work in the mode that the transmittance is 50%, and the intelligent air conditioner is set to work in the mode of 26 DEG C.

In the embodiment of the present disclosure, the operation that the control device sets the working state of the controlled device includes that an environmental conditioning device and/or an audio and video entertainment device are/is controlled to be started. The environmental conditioning device may include functions of an intelligent lighting device, a curtain device, an air conditioner, an air purifier and/or a humidifier. The audio and video entertainment device may include a television and/or sound equipment, etc.

In an embodiment, the method for processing data applied to the control device further includes that:
responsive to monitoring an operation instruction representing regulation of the state parameter, the controlled device that the operation instruction representing regulation is for and a regulated state parameter are determined; and
the regulated state parameter is sent to the controlled device that the operation instruction is for, and the state parameter in the preset mode is updated according to the regulated state parameter.

In the embodiment, the control device may monitor the operation instruction of regulating the state parameter on the device. The operation instruction of regulation may be for only part of controlled devices in the same mode, or may be for all controlled devices in the same mode. For example, the operation instruction is an instruction of regulating the state parameter of the intelligent air conditioner in the intelligent devices included in the "home mode". For another example, the operation instruction is an instruction of simultaneously regulating the state parameters of the intelligent curtain and air conditioner included in the "home mode".

It can be understood that the control device may pertinently regulate, based on a perception of the user, part of controlled devices in the preset mode, such that the effectiveness of regulation may be improved. The control device may simultaneously regulate all controlled devices in the same mode at one time, such that the number of the user's operations may be reduced, and the user experience may be improved.

In the embodiment of the present disclosure, for example, the control device, based on the BT communication manner, receives the state parameter reported by the controlled device. The control device may receive the state parameter actively reported by the controlled device. Of course, the control device may also send a state configuration request instruction to the controlled device and receive the state parameter reported by the controlled device based on the state configuration request instruction. In addition, the control device may receive the state parameter reported by the controlled device based on a set time interval, or may receive the state parameter reported by the controlled device under the condition that the state parameter of the controlled device is changed.

For example, after the control device receives the state parameters actively reported for the nth time by part of controlled devices or all the controlled devices, the control device may display the state parameters or present, in a voice broadcast manner, the state parameters to the user, and receive an operation instruction from the user of regulating the state parameters reported for the nth time. The operation instruction may be a first operation instruction or a second operation instruction. The operation instruction carries regulation parameters, such that the control device may send the regulation parameters to the controlled devices based on an input of the user.

It should be noted that the regulation parameter includes a working parameter that the controlled device is required to be regulated to. In the invention, the regulation parameter includes an amplitude parameter by which the regulation needs to be performed based on the state parameter reported for the nth time by the controlled device.

For example, when the temperature parameter reported by the intelligent air conditioner for the second time is 29 DEG C and the transmittance of the intelligent curtain is 40%, after the home device management APP in the mobile terminal displays the present temperature parameter of the intelligent air conditioner and the transmittance of the intelligent curtain, the mobile terminal, if receiving a regulation parameter 26 DEG C for the intelligent air conditioner input by the user based on the home device management APP, may send the temperature regulation parameter 26 DEG C to the intelligent air conditioner. In the invention, when receiving a regulation amplitude parameter of decreasing by 3 DEG C for the intelligent air conditioner input by the user based on the home device management APP, the mobile terminal sends the regulation amplitude parameter of decreasing by 3 DEG C to the intelligent air conditioner.

For another example, when the temperature parameter of the intelligent air conditioner is 25 DEG C and the transmittance of the intelligent curtain is 40%, after the home device management APP in the mobile terminal displays the present temperature parameter of the intelligent air conditioner and the transmittance of the intelligent curtain, an instruction, input by the user at one time based on the home device management APP, of increasing the parameters of the controlled devices in the preset "home mode" by one level may be received. In such case, the home device management APP in the mobile terminal, based on the unified regulation instruction, may determine the regulation parameter 26 DEG C of the intelligent air conditioner and the transmittance 50% of the intelligent curtain, send the temperature regulation parameter 26 DEG C to the intelligent air conditioner and send the transmittance parameter 50% to the intelligent curtain.

In the embodiment of the present disclosure, based on the state parameter received for the nth time, the control device may further receive a state parameter reported for the (n+1)th time by the controlled device after the controlled device regulates the state based on the regulation parameter. Or, the control device may determine the present state parameter of the controlled device according to the state parameter reported for the nth time by the control device and the regulation parameter.

In the embodiment, the control device, after sending the regulation parameter to the controlled device, may receive from the controlled device the state parameter reported for the (n+1)th time by the controlled device after the controlled device regulates the state based on the regulation parameter, i.e., the updated present state parameter of the controlled device. For example, the mobile terminal may receive 26 DEG C reported for the (n+1)th time by the intelligent air conditioner after the intelligent air conditioner regulates the state.

In the embodiment of the present disclosure, since the control device may send the regulation parameter based on the received state parameter which is reported for the nth time by the controlled device, the control device may also determine the present state parameter of the controlled device based on its own regulation over the controlled device. For example, the home device management APP in the mobile terminal may determine that the present temperature parameter of the air conditioner is 26 DEG C according to the temperature parameter 29 DEG C reported for the second time by the intelligent air conditioner and the received regulation amplitude parameter of decreasing by 3 DEG C input by the user based on the home device management APP.

It can be understood that, in the embodiment of the present disclosure, the control device may regulate the state parameters of part of controlled devices or all the controlled devices in the preset mode to control the working states of the controlled devices, such that the controlled devices may gradually tend to work in the states expected by the user, to implement determination of the state parameters of the expected states.

In an embodiment, the method for processing data applied to the control device further includes that:
the state parameter which has been regulated by the controlled device based on the regulation instruction for the controlled device is received; and
the state parameter in the preset mode is updated according to the regulated state parameter. In the embodiment, the state parameter of the controlled device is not limited to be regulated and sent through the control device. The controlled device may also determine the present state parameter based on a monitored operation of the user over the controlled device, and report the state parameter to the control device. For example, the intelligent air conditioner, after monitoring a click operation of the user over a temperature control on a Touch Panel (TP), regulates the present state parameter and reports the regulated state parameter to the control device.

In the invention, the method for processing data further includes that:
whether a configuration of the preset mode is turned on is determined; and
under the condition that the configuration of the preset mode is turned on, the state parameter of the controlled device is acquired.

In the embodiment, the control device, under the condition that the configuration of the preset mode is turned on, acquires the state parameter of the controlled device. Whether the configuration of the preset mode is turned on is set by the user. When the user is intended to configure a state parameter of an ideal state for the controlled device, namely the user is intended to record a mode, the configuration of the preset mode in the control device is set to be turned on.

Under the condition that the configuration of the preset mode is turned on, the control device sends a state configuration request instruction to the controlled device to acquire the state parameter sent by the controlled device based on the state configuration request instruction. Under the condition that the configuration of the preset mode is turned on, the control device may also directly synchronize the state parameter, on the server side, of the controlled device. In the embodiment, under the condition that the configuration of the preset mode is turned on, namely the state parameter of the controlled device is only acquired under the condition that the user has requirements of mode recording, such that unnecessary instruction interactions are reduced, and the power consumption of the control device is reduced.

In the embodiment of the present disclosure, the control device may monitor the operation instruction for the state parameter of the controlled device. When a user determines, based on the working state of the controlled device, that the state parameter is required to be saved, the control device may receive the operation instruction of saving the state parameter, and the control device may save, based on the operation instruction of saving, the determined present state parameter of the controlled device as the state parameter in the preset mode. In the process, the present state parameter is saved for the preset mode based on an intuitive feeling of the user and responsive to monitoring the operation instruction of saving the state parameter from the user, thereby implementing the recording of the state parameter in the mode. It can be understood that, in the manner of recording the state parameter of the controlled device in the preset mode in the present disclosure, saving is confirmed based on the intuitive feeling of the user, such that the probability of repeated operation and setting which is caused by the fact that a true feeling of the user is not considered is reduced, and the user experience is improved.

FIG. 2 is a second flow chart showing a method for processing data, according to an embodiment of the present disclosure. The method for processing data is applied to a controlled device, and as illustrated in FIG. 2, the method includes the following step.

In S21, a state parameter in a preset mode is acquired, the state parameter in the preset mode being configured for a control device to monitor an operation instruction of saving the state parameter for setting and saving.

In the embodiment, the controlled device refers to an intelligent home device capable of receiving a control instruction of the control device, for example, an intelligent television and an intelligent air conditioner. The controlled device may communicate with the control device based on a wireless communication manner or a wired communication manner.

In the embodiment of the present disclosure, the controlled device may acquire the state parameter in the preset mode, such that the control device sets and saves the state parameter for the preset mode responsive to monitoring the operation instruction of saving the state parameter.

It should be noted that, in the embodiment of the present disclosure, the operation that the controlled device acquires the state parameter in the preset mode includes that the controlled device acquires the state parameter in the preset mode based on a monitored operation of a user over the controlled device, and further includes that the controlled device receives the state parameter in the preset mode sent by the control device.

In addition, in the embodiment of the present disclosure, the operation that the controlled device acquires the state parameter in the preset mode includes that the control device acquires the state parameter in the preset mode for the first time, and further includes that the controlled device receives a regulated state parameter in the preset mode.

In an embodiment, the method for processing data applied to the controlled device further includes that:
the state parameter updated by the control device in the preset mode is received; and
the updated state parameter in the preset mode is saved.

In a recording stage of the preset mode, the state parameter in the preset mode may be a regulated state parameter sent by the control device. The controlled device, after receiving the state parameter, may save and update it to the preset mode. The state parameter may be a regulated state parameter, sent by the control device based on monitoring an operation instruction representing regulation, in the preset mode.

In an embodiment, the operation that the state parameter in the preset mode is acquired includes that:
the state parameter in the preset mode sent by the control device is received; or
a present state parameter of the controlled device is reported, and responsive to a confirmation instruction sent by the control device, the present state parameter is determined as the state parameter in the preset mode.

In the embodiment, the controlled device may receive the state parameter in the preset mode sent by the control device. After the setting of preset mode is completed, the user may start a saved mode based on an operation over the control device, namely the state parameter in the saved preset mode may be sent to the controlled device. The controlled device saves the updated state parameter in the preset mode according to the received state parameter in the preset mode, and the controlled device works according to the state parameter in the preset mode.

For example, based on recording of a "home mode" by the control device, when the user returns home, the "home mode" may be triggered in the control device, the state parameter in the "home mode" is sent to the corresponding controlled device. The controlled device may save the state parameter in the preset mode and works according to the state parameter in the mode.

In the embodiment, the controlled device, after reporting the present state parameter to the control device, may also determine the present state parameter as the state parameter in the preset mode based on determination of the control device. It should be noted that, in the embodiment, the controlled device may actively report the state parameter to the control device. The controlled device may report the state parameter based on a set time interval, or may report a changed state parameter to the control device responsive to detecting that the state parameter is changed.

In the embodiment of the present disclosure, the controlled device may acquire the state parameter in the preset mode such that the control device saves the state parameter for the preset mode. In this process, the probability of repeated operation and setting which is caused by the fact that a true feeling of the user is not considered is reduced, and thus the user experience may be improved.

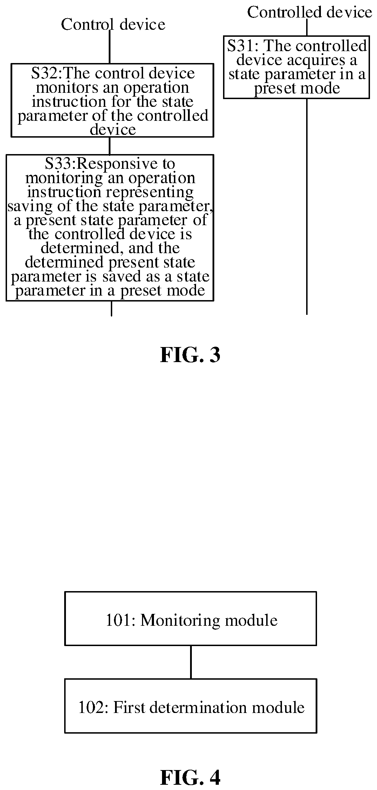

FIG. 3 is an interaction flow chart showing a method for processing data, not being part of the invention. As illustrated in FIG. 3, the method for processing data applied to a control device and a controlled device includes the following steps.

In S31, the controlled device acquires a state parameter in a preset mode.

In S32, the control device monitors an operation instruction for the state parameter of the controlled device.

In S33, responsive to monitoring an operation instruction representing saving of the state parameter, a present state parameter of the controlled device is determined, and the determined present state parameter is saved as a state parameter in a preset mode.

In the embodiment of the present disclosure, the control device may monitor the operation instruction for the state parameter of the controlled device. When a user determines, based on the working state of the controlled device, that the state parameter is required to be saved, the control device may receive the operation instruction of saving the state parameter, and the control device may save, based on the operation instruction of saving, the determined present state parameter of the controlled device as the state parameter in the preset mode. In the process, the present state parameter is saved for the preset mode based on an intuitive feeling of the user responsive to monitoring the operation instruction of saving the state parameter from the user, thereby implementing the recording of the state parameter in the mode. It can be understood that, in the manner of recording the state parameter of the controlled device in the preset mode in the present disclosure, saving is confirmed based on the intuitive feeling of the user, such that the probability of repeated operation and setting which is caused by the fact that a true feeling of the user is not considered is reduced, and the user experience is improved.

FIG. 4 is a first diagram of a device for processing data, according to an exemplary embodiment. Referring to FIG. 4, the device for processing data is applied to a control device. The device for processing data includes:
a monitoring module 101, configured to monitor an operation instruction for a state parameter of a controlled device; and
a first determination module 102, configured to, responsive to monitoring an operation instruction representing saving of the state parameter, determine a present state parameter of the controlled device and save the determined present state parameter as a state parameter in a preset mode.

Optionally, the device further includes:
a second determination module 103, configured to, responsive to monitoring an operation instruction representing setting of the state parameter of the controlled device, determine the state parameter, indicated by the operation instruction representing setting, of the controlled device in the preset mode; and
a first sending module 104, configured to send the determined state parameter to the controlled device and set a working state of the controlled device.

Optionally, the device further includes:
a third determination module 105, configured to, responsive to monitoring an operation instruction representing regulation of the state parameter, determine the controlled device that the operation instruction representing regulation is for and a regulated state parameter; and
a second sending module 106, configured to send the regulated state parameter to the controlled device that the operation instruction is for and update the state parameter in the preset mode according to the regulated state parameter.

Optionally, the device further includes:
a first receiving module 107, configured to receive the state parameter which has been regulated by the controlled device based on a regulation instruction for the controlled device; and
an updating module 108, configured to update the state parameter in the preset mode according to the regulated state parameter.

The device further includes:
a fourth determination module 109, configured to determine whether a configuration of the preset mode is turned on; and
a first acquisition module 110, configured to, under the condition that the configuration of the preset mode is turned on, acquire the state parameter of the controlled device.

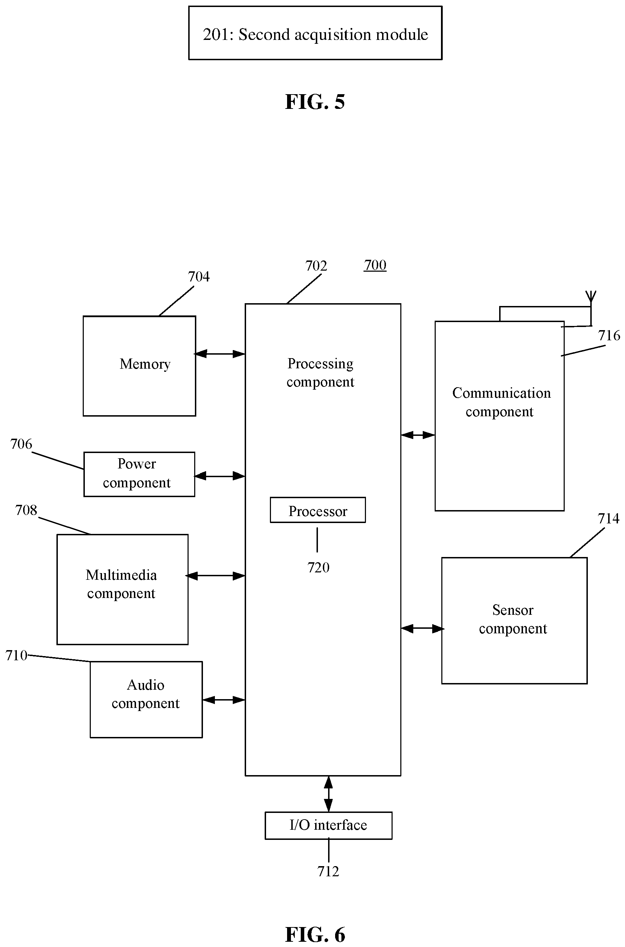

FIG. 5 is a second diagram of a device for processing data, according to an exemplary embodiment. Referring to FIG. 5, the device for processing data is applied to a controlled device. The device for processing data includes:
a second acquisition module 201, configured to acquire a state parameter in a preset mode, the state parameter in the preset mode being configured for a control device to monitor an operation instruction of saving the state parameter for setting and saving.

Optionally, the device further includes:
a second receiving module 202, configured to receive the state parameter updated by the control device in the preset mode; and
a saving module 203, configured to save the updated state parameter in the preset mode.

Optionally, the device further includes:
the second acquisition module 201, specifically configured to receive the state parameter in the preset mode sent by the control device, or report a present state parameter of the controlled device and, responsive to a confirmation instruction sent by the control device, determine the present state parameter as the state parameter in the preset mode.

With respect to the device in the above embodiment, the specific manners for respective modules performing operations therein have been described in detail in the embodiment regarding the method, which will not be elaborated herein.

FIG. 6 is a block diagram of a control device, not being part of the invention. For example, the control device 700 may be an intelligent speaker or a smart phone.

Referring to FIG. 6, the control device 700 may include one or more of the following components: a processing component 702, a memory 704, a power component 706, a multimedia component 708, an audio component 710, an Input/Output (I/O) interface 712, a sensor component 714, and a communication component 716.

The processing component 702 typically controls overall operations of the control device 700, such as the operations associated with display, telephone calls, data communications, camera operations, and recording operations. The processing component 702 may include one or more processors 720 to execute instructions to perform all or part of the steps in the abovementioned method. Moreover, the processing component 702 may include one or more modules which facilitate interaction between the processing component 702 and other components. For example, the processing component 702 may include a multimedia module to facilitate interaction between the multimedia component 708 and the processing component 702.

The memory 704 is configured to store various types of data to support the operation on the control device 700. Examples of such data include instructions for any APPs or methods operated on the control device 700, contact data, phonebook data, messages, pictures, video, etc. The memory 704 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 706 provides power for various components of the control device 700. The power component 806 may include a power management system, one or more power supplies, and other components associated with generation, management and distribution of power for the control device 700.

The multimedia component 708 includes a screen providing an output interface between the control device 700 and a user. In some embodiments, the screen may include a Liquid Crystal Display (LCD) and a TP. If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 708 includes a front camera and/or a rear camera. The front camera and/or the rear camera may receive external multimedia data when the control device 700 is in an operation mode, such as a photographing mode or a video mode. Each of the front camera and the rear camera may be a fixed optical lens system or have focusing and optical zooming capabilities.

The audio component 710 is configured to output and/or input an audio signal. For example, the audio component 810 includes a Microphone (MIC). The MIC is configured to receive an external audio signal when the control device 700 is in the operation mode, such as a call mode, a recording mode and a voice recognition mode. The received audio signal may further be stored in the memory 804 or sent through the communication component 716. In some embodiments, the audio component 710 further includes a speaker which is configured to output the audio signal.

The I/O interface 712 provides an interface between the processing component 702 and a peripheral interface module. The peripheral interface module may be a keyboard, a click wheel, a button and the like. The button may include, but not limited to: a home button, a volume button, a starting button and a locking button.

The sensor component 714 includes one or more sensors which is configured to provide status assessment in various aspects for the control device 700. For example, the sensor component 714 may detect an on/off status of the control device 700 and relative positioning of components, such as a display and small keyboard of the control device 700. The sensor component 714 may further detect a change in a position of the control device 700 or a component of the control device 700, presence or absence of contact between the user and the control device 700, orientation or acceleration/deceleration of the control device 700 and a change in temperature of the control device 700. The sensor component 714 may include a proximity sensor which is configured to detect presence of an object nearby without any physical contact. The sensor component 714 may also include a light sensor, such as a Complementary Metal Oxide Semiconductor (CMOS) or Charge Coupled Device (CCD) image sensor, which is configured to be used in an imaging APP. In some embodiments, the sensor component 714 may also include an acceleration sensor, a gyroscope sensor, a magnetic sensor, a pressure sensor or a temperature sensor.

The communication component 716 is configured to facilitate wired or wireless communication between the control device 700 and other devices. The control device 700 may access a communication-standard-based wireless network, such as a Wi-Fi network, a 2nd-Generation (2G) or 3rd-Generation (3G) network or a combination thereof. In an exemplary embodiment, the communication component 716 receives a broadcast signal or broadcast associated information from an external broadcast management system through a broadcast channel. In an exemplary embodiment, the communication component 716 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a BT technology and other technologies.

In an exemplary embodiment, the control device 700 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and the control device 700 is configured to execute the abovementioned method.

In an exemplary embodiment, there is also provided a non-transitory computer-readable storage medium including instructions, for example, the memory 704 including instructions. The instructions may be executed by the processor 720 of the control device 700 to implement the abovementioned method. For example, the non-transitory computer-readable storage medium may be a ROM, a Random Access Memory (RAM), a Compact Disc Read-Only Memory (CD-ROM), a magnetic tape, a floppy disc, an optical data storage device and the like.

According to a non-transitory computer-readable storage medium, instructions in the storage medium is executed by a processor of a control device to enable the control device to execute a method for processing data, the method including that:
an operation instruction for a state parameter of a controlled device is monitored; and
responsive to monitoring an operation instruction representing saving of the state parameter, a present state parameter of the controlled device is determined, and the determined present state parameter is saved as a state parameter in a preset mode.

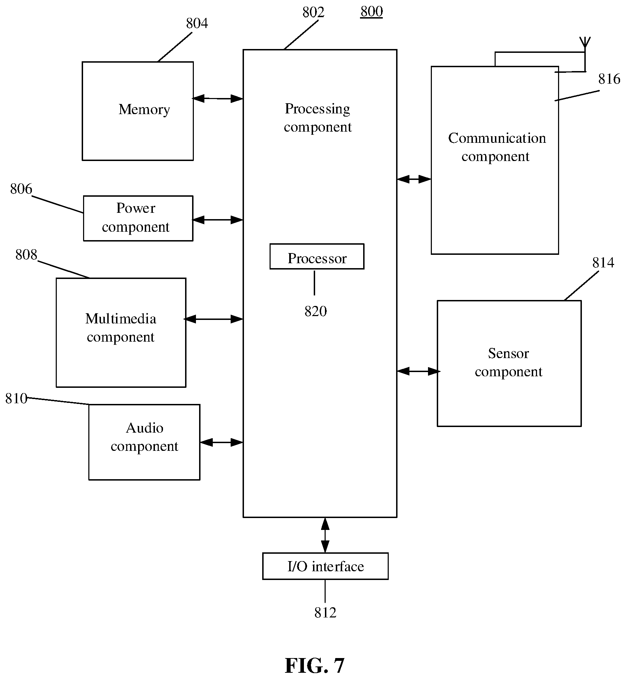

FIG. 7 is a block diagram of a controlled device 800, not being part of the invention. For example, the controlled device 800 may be an intelligent air conditioner and an intelligent washing machine.

Referring to FIG. 7, the controlled device 800 may include one or more of the following components: a processing component 802, a memory 804, a power component 806, a multimedia component 808, an audio component 810, an I/O interface 812, a sensor component 814, and a communication component 816.

The processing component 802 typically controls overall operations of the controlled device 800, such as the operations associated with display, telephone calls, data communications, camera operations, and recording operations. The processing component 802 may include one or more processors 820 to execute instructions to perform all or part of the steps in the abovementioned method. Moreover, the processing component 802 may include one or more modules which facilitate interaction between the processing component 802 and other components. For example, the processing component 802 may include a multimedia module to facilitate interaction between the multimedia component 808 and the processing component 802.

The memory 804 is configured to store various types of data to support the operation on the controlled device 800. Examples of such data include instructions for any APPs or methods operated on the controlled device 800, contact data, phonebook data, messages, pictures, video, etc. The memory 804 may be implemented by any type of volatile or non-volatile memory devices, or a combination thereof, such as an SRAM, an EEPROM, an EPROM, a PROM, a ROM, a magnetic memory, a flash memory, and a magnetic or optical disk.

The power component 806 provides power for various components of the controlled device 800. The power component 806 may include a power management system, one or more power supplies, and other components associated with generation, management and distribution of power for the controlled device 800.

The multimedia component 808 includes a screen providing an output interface between the controlled device 800 and a user. In some embodiments, the screen may include an LCD and a TP. If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 808 includes a front camera and/or a rear camera. The front camera and/or the rear camera may receive external multimedia data when the controlled device 800 is in an operation mode, such as a photographing mode or a video mode. Each of the front camera and the rear camera may be a fixed optical lens system or have focusing and optical zooming capabilities.

The audio component 810 is configured to output and/or input an audio signal. For example, the audio component 810 includes a MIC. The MIC is configured to receive an external audio signal when the controlled device 800 is in the operation mode, such as a call mode, a recording mode and a voice recognition mode. The received audio signal may further be stored in the memory 804 or sent through the communication component 816. In some embodiments, the audio component 810 further includes a speaker configured to output the audio signal.

The I/O interface 812 provides an interface between the processing component 802 and a peripheral interface module. The peripheral interface module may be a keyboard, a click wheel, a button and the like. The button may include, but not limited to: a home button, a volume button, a starting button and a locking button.

The sensor component 814 includes one or more sensors which is configured to provide status assessment in various aspects for the controlled device 800. For example, the sensor component 814 may detect an on/off status of the controlled device 800 and relative positioning of components, such as a display and small keyboard of the controlled device 800. The sensor component 814 may further detect a change in a position of the controlled device 800 or a component of the controlled device 800, presence or absence of contact between the user and the controlled device 800, orientation or acceleration/deceleration of the controlled device 800 and a change in temperature of the controlled device 800. The sensor component 814 may include a proximity sensor which is configured to detect presence of an object nearby without any physical contact. The sensor component 814 may also include a light sensor, such as a CMOS or CCD image sensor, which is configured to be used in an imaging APP. In some embodiments, the sensor component 814 may also include an acceleration sensor, a gyroscope sensor, a magnetic sensor, a pressure sensor or a temperature sensor.

The communication component 816 is configured to facilitate wired or wireless communication between the controlled device 800 and other devices. The controlled device 800 may access a communication-standard-based wireless network, such as a Wi-Fi network, a 2G or 3G network or a combination thereof. In an exemplary embodiment, the communication component 816 receives a broadcast signal or broadcast associated information from an external broadcast management system through a broadcast channel. In an exemplary embodiment, the communication component 816 further includes an NFC module to facilitate short-range communication. For example, the NFC module may be implemented based on an RFID technology, an IrDA technology, a UWB technology, a BT technology and other technologies.

In an exemplary embodiment, the controlled device 800 may be implemented by one or more ASICs, DSPs, DSPDs, PLDs, FPGAs, controllers, micro-controllers, microprocessors or other electronic components, and the controlled device 800 is configured to execute the abovementioned method.

In an exemplary embodiment, there is also provided a non-transitory computer-readable storage medium including instructions, for example, the memory 804 including instructions. The instructions may be executed by the processor 820 of the controlled device 800 to implement the abovementioned method. For example, the non-transitory computer-readable storage medium may be a ROM, a RAM, a CD-ROM, a magnetic tape, a floppy disc, an optical data storage device and the like.

According to a non-transitory computer-readable storage medium, instructions in the storage medium is executed by a processor of a controlled device to enable the controlled device to execute a method for processing data, the method including that:

a state parameter in a preset mode is acquired, the state parameter in the preset mode being configured for a control device to monitor an operation instruction of saving the state parameter for setting and saving.

Other implementation solutions of the present disclosure will be apparent to those skilled in the art from consideration of the specification and practice of the present disclosure. This present disclosure is intended to cover any variations, uses, or adaptations provided that they are encompassed within the scope of the following claims.

It should be understood that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for processing data, applied to a control device, comprising:
monitoring an operation instruction for a state parameter of a controlled device (S11); and
responsive to monitoring an operation instruction representing saving of the state parameter, determining a present state parameter of the controlled device, and saving the determined present state parameter as a state parameter in a preset mode (S12);
wherein the method further comprises:
determining whether a configuration of the preset mode is turned on; and
acquiring the state parameter of the controlled device when the configuration of the preset mode is turned on;
wherein the method further comprises:
responsive to monitoring an operation instruction representing regulation of the state parameter, determining the controlled device that the operation instruction representing regulation is for, and an amplitude parameter by which the regulation is to be performed based on the state parameter; and
sending the amplitude parameter to the controlled device that the operation instruction is for, and updating the state parameter in the preset mode according to the amplitude parameter.

2. The method of claim 1, further comprising:
responsive to monitoring an operation instruction representing setting of the state parameter of the controlled device, determining the state parameter, indicated by the operation instruction representing setting, of the controlled device in the preset mode; and
sending the determined state parameter to the controlled device, and setting a working state of the controlled device.

3. The method of claim 1 or 2, further comprising:
receiving the state parameter which has been regulated by the controlled device based on a regulation instruction for the controlled device; and
updating the state parameter in the preset mode according to a regulated state parameter.

4. A method for processing data, applied to a controlled device, the method comprising:
acquiring a state parameter in a preset mode, the state parameter being acquired responsive to a configuration of the preset mode being turned on, and the state parameter in the preset mode being configured for a control device to monitor an operation instruction of saving the state parameter for setting and saving,
wherein the state parameter in the preset mode is updated according to an amplitude parameter by which the regulation is to be performed based on the state parameter.

5. The method of claim 4, further comprising:
receiving the state parameter updated by the control device in the preset mode; and
saving the updated state parameter in the preset mode.

6. The method of claim 4 or 5, wherein acquiring the state parameter in the preset mode comprises:
receiving the state parameter in the preset mode sent by the control device; or
reporting a present state parameter of the controlled device, and responsive to a confirmation instruction sent by the control device, determining the present state parameter as the state parameter in the preset mode.

7. A control device, comprising:
a monitoring module (101), configured to monitor an operation instruction for a state parameter of a controlled device; and
a first determination module (102), configured to, responsive to monitoring an operation instruction representing saving of the state parameter, determine a present state parameter of the controlled device and save the determined present state parameter as a state parameter in a preset mode;
wherein the control device further comprises:
a fourth determination module, configured to determine whether a configuration of the preset mode is turned on; and
a first acquisition module, configured to, under the condition that the configuration of the preset mode is turned on, acquire the state parameter of the controlled device;
wherein the control device further comprises:
a third determination module, configured to, responsive to monitoring an operation instruction representing regulation of the state parameter, determine the controlled device that the operation instruction representing regulation is for, and an amplitude parameter by which the regulation is to be performed based on the state parameter; and
a second sending module, configured to send the amplitude parameter to the controlled device that the operation instruction is for, and update the state parameter in the preset mode according to the amplitude parameter.

8. The control device of claim 7, further comprising:
a second determination module, configured to, responsive to monitoring an operation instruction representing setting of the state parameter of the controlled device, determine the state parameter, indicated by the operation instruction representing setting, of the controlled device in the preset mode; and
a first sending module, configured to send the determined state parameter to the controlled device and set a working state of the controlled device.

9. The control device of claim 7 or 8, further comprising:
a first receiving module, configured to receive the state parameter which has been regulated by the controlled device based on a regulation instruction for the controlled device; and
an updating module, configured to update the state parameter in the preset mode according to a regulated state parameter.

10. A controlled device, comprising:
a second acquisition module (201), configured to acquire a state parameter in a preset mode, the state parameter being acquired responsive to a configuration of the preset mode being turned on, and the state parameter in the preset mode being configured for a control device to monitor an operation instruction of saving the state parameter for setting and saving,
wherein the state parameter in the preset mode is updated according to an amplitude parameter by which the regulation is to be performed based on the state parameter.

11. The controlled device of claim 10, further comprising:
a second receiving module, configured to receive the state parameter updated by the control device in the preset mode; and
a saving module, configured to save the updated state parameter in the preset mode.

12. The controlled device of claim 10 or 11, wherein the second acquisition module (201) is specifically configured to receive the state parameter in the preset mode sent by the control device, or report a present state parameter of the controlled device and, responsive to a confirmation instruction sent by the control device, determine the present state parameter as the state parameter in the preset mode.

13. A non-transitory computer-readable storage medium, instructions in the storage medium being executed by a processor of a computer to enable the computer to execute the method for processing data of any one of claims 1-3 or 4-6.

## Patentansprüche

1. Verfahren zum Verarbeiten von Daten, das auf eine Steuervorrichtung angewendet wird, umfassend:
Überwachen einer Betriebsanweisung für einen Zustandsparameter einer gesteuerten Vorrichtung (S11); und
als Reaktion auf das Überwachen einer Betriebsanweisung, die das Speichern des Zustandsparameters darstellt, Bestimmen eines aktuellen Zustandsparameters der gesteuerten Vorrichtung und Speichern des bestimmten aktuellen Zustandsparameters als Zustandsparameter in einem voreingestellten Modus (S12);
wobei das Verfahren weiter umfasst:
Bestimmen, ob eine Konfiguration des voreingestellten Modus eingeschaltet ist; und
Erheben des Zustandsparameters der gesteuerten Vorrichtung, wenn die Konfiguration des voreingestellten Modus eingeschaltet ist;
wobei das Verfahren weiter umfasst:
als Reaktion auf das Überwachen einer Betriebsanweisung, die eine Regelung des Zustandsparameters darstellt, Bestimmen der gesteuerten Vorrichtung, für die die Betriebsanweisung, die eine Regelung darstellt, bestimmt ist, und eines Amplitudenparameters, durch den die Regelung basierend auf dem Zustandsparameter durchzuführen ist; und
Senden des Amplitudenparameters an die gesteuerte Vorrichtung, für die die Betriebsanweisung bestimmt ist, und Aktualisieren des Zustandsparameters in dem voreingestellten Modus gemäß dem Amplitudenparameter.

2. Verfahren nach Anspruch 1, weiter umfassend:
als Reaktion auf das Überwachen einer Betriebsanweisung, die das Einstellen des Zustandsparameters der gesteuerten Vorrichtung darstellt, Bestimmen des Zustandsparameters, der durch die Betriebsanweisung angegeben wird, die die Einstellung darstellt, der gesteuerten Vorrichtung in dem voreingestellten Modus; und
Senden des bestimmten Zustandsparameters an die gesteuerte Vorrichtung und Einstellen eines Arbeitszustands der gesteuerten Vorrichtung.

3. Verfahren nach Anspruch 1 oder 2, weiter umfassend:
Empfangen des Zustandsparameters, der von der gesteuerten Vorrichtung basierend auf einer Regelungsanweisung für die gesteuerte Vorrichtung geregelt wurde; und
Aktualisieren des Zustandsparameters in dem voreingestellten Modus gemäß einem geregelten Zustandsparameter.

4. Verfahren zum Verarbeiten von Daten, das auf eine gesteuerte Vorrichtung angewendet wird, wobei das Verfahren umfasst:
Erheben eines Zustandsparameters in einem voreingestellten Modus, wobei der Zustandsparameter als Reaktion auf eine Konfiguration des voreingestellten Modus, die eingeschaltet ist, erhoben wird, und der Zustandsparameter in dem voreingestellten Modus für eine Steuervorrichtung konfiguriert ist, um eine Betriebsanweisung zum Speichern des Zustandsparameters zum Einstellen und Speichern zu überwachen,
wobei der Zustandsparameter in dem voreingestellten Modus gemäß einem Amplitudenparameter aktualisiert wird, durch den die Regelung basierend auf dem Zustandsparameter durchzuführen ist.

5. Verfahren nach Anspruch 4, weiter umfassend:
Empfangen des von der Steuervorrichtung in dem voreingestellten Modus aktualisierten Zustandsparameters; und
Speichern der aktualisierten Zustandsparameter in dem voreingestellten Modus.

6. Verfahren nach Anspruch 4 oder 5, wobei das Erheben des Zustandsparameters in dem voreingestellten Modus umfasst:
Empfangen des Zustandsparameters in dem voreingestellten Modus, der von der Steuervorrichtung gesendet wird; oder
Melden eines aktuellen Zustandsparameters der gesteuerten Vorrichtung und Bestimmen des aktuellen Zustandsparameters als Zustandsparameter in dem voreingestellten Modus als Reaktion auf eine Bestätigungsanweisung, die von der Steuervorrichtung gesendet wird.

7. Steuervorrichtung, umfassend:
ein Überwachungsmodul (101), das konfiguriert ist, um eine Betriebsanweisung für einen Zustandsparameter einer gesteuerten Vorrichtung zu überwachen; und
ein erstes Bestimmungsmodul (102), das konfiguriert ist, um als Reaktion auf das Überwachen einer Betriebsanweisung, die das Speichern des Zustandsparameters darstellt, einen aktuellen Zustandsparameter der gesteuerten Vorrichtung zu bestimmen und den bestimmten aktuellen Zustandsparameter als einen Zustandsparameter in einem voreingestellten Modus zu speichern;
wobei die Steuervorrichtung weiter umfasst:
ein viertes Bestimmungsmodul, das konfiguriert ist, um zu bestimmen, ob eine Konfiguration des voreingestellten Modus eingeschaltet ist; und
ein erstes Erhebungsmodul, das konfiguriert ist, um unter der Bedingung, dass die Konfiguration des voreingestellten Modus eingeschaltet ist, den Zustandsparameter der gesteuerten Vorrichtung zu erheben;
wobei die Steuervorrichtung weiter umfasst:
ein drittes Bestimmungsmodul, das konfiguriert ist, um als Reaktion auf das Überwachen einer Betriebsanweisung, die eine Regelung des Zustandsparameters darstellt, die gesteuerte Vorrichtung, für die die Betriebsanweisung, die eine Regelung darstellt, bestimmt ist, und einen Amplitudenparameter zu bestimmen, durch den die Regelung basierend auf dem Zustandsparameter durchzuführen ist; und
ein zweites Sendemodul, das konfiguriert ist, um den Amplitudenparameter an die gesteuerte Vorrichtung zu senden, für die die Betriebsanweisung bestimmt ist, und den Zustandsparameter in dem voreingestellten Modus gemäß dem Amplitudenparameter zu aktualisieren.

8. Steuervorrichtung nach Anspruch 7, weiter umfassend:
ein zweites Bestimmungsmodul, das konfiguriert ist, um als Reaktion auf das Überwachen einer Betriebsanweisung, die das Einstellen des Zustandsparameters der gesteuerten Vorrichtung darstellt, den Zustandsparameter, der durch die Betriebsanweisung angegeben wird, die die Einstellung darstellt, der gesteuerten Vorrichtung in dem voreingestellten Modus zu bestimmen; und
ein erstes Sendemodul, das konfiguriert ist, um den bestimmten Zustandsparameter an die gesteuerte Vorrichtung zu senden, und einen Arbeitszustand der gesteuerten Vorrichtung einzustellen.

9. Steuervorrichtung nach Anspruch 7 oder 8, weiter umfassend:
ein erstes Empfangsmodul, das konfiguriert ist, um den Zustandsparameter zu empfangen, der von der gesteuerten Vorrichtung basierend auf einer Regelungsanweisung für die gesteuerte Vorrichtung geregelt wurde; und
ein Aktualisierungsmodul, das konfiguriert ist, um den Zustandsparameter in dem voreingestellten Modus gemäß einem geregelten Zustandsparameter zu aktualisieren.

10. Gesteuerte Vorrichtung, umfassend:
ein zweites Erhebungsmodul (201), das konfiguriert ist, um einen Zustandsparameter in einem voreingestellten Modus zu erheben, wobei der Zustandsparameter als Reaktion auf eine Konfiguration des voreingestellten Modus, die eingeschaltet ist, erhoben wird, und der Zustandsparameter in dem voreingestellten Modus für eine Steuervorrichtung konfiguriert ist, um eine Betriebsanweisung zum Speichern des Zustandsparameters zum Einstellen und Speichern zu überwachen,
wobei der Zustandsparameter in dem voreingestellten Modus gemäß einem Amplitudenparameter aktualisiert wird, durch den die Regelung basierend auf dem Zustandsparameter durchzuführen ist.

11. Gesteuerte Vorrichtung nach Anspruch 10, weiter umfassend:
ein zweites Empfangsmodul, das konfiguriert ist, um den von der Steuervorrichtung in dem voreingestellten Modus aktualisierten Zustandsparameter zu empfangen; und
ein Speichermodul, das konfiguriert ist, um den aktualisierten Zustandsparameter in dem voreingestellten Modus zu speichern.

12. Gesteuerte Vorrichtung nach Anspruch 10 oder 11, wobei das zweite Erhebungsmodul (201) speziell konfiguriert ist, um den Zustandsparameter in dem voreingestellten Modus, der von der Steuervorrichtung gesendet wird, zu empfangen oder einen aktuellen Zustandsparameter der gesteuerten Vorrichtung zu melden, und als Reaktion auf eine Bestätigungsanweisung, die von der Steuervorrichtung gesendet wird, den aktuellen Zustandsparameter als den Zustandsparameter in dem voreingestellten Modus zu bestimmen.

13. Nichtflüchtiges, computerlesbares Speichermedium, wobei Anweisungen in dem Speichermedium von einem Prozessor eines Computers ausgeführt werden, um es dem Computer zu ermöglichen, das Verfahren zum Verarbeiten von Daten nach einem der Ansprüche 1-3 oder 4-6 auszuführen.

## Revendications

1. Procédé de traitement de données, appliqué à un dispositif de commande, comprenant :
la surveillance d'une instruction d'opération pour un paramètre d'état d'un dispositif commandé (S11) ; et
en réponse à la surveillance d'une instruction d'opération représentant la sauvegarde du paramètre d'état, la détermination d'un paramètre d'état actuel du dispositif commandé, et la sauvegarde du paramètre d'état actuel déterminé en tant que paramètre d'état dans un mode prédéfini (S12) ;
dans lequel le procédé comprend en outre :
le fait de déterminer si une configuration du mode prédéfini est activée ; et
l'acquisition du paramètre d'état du dispositif commandé lorsque la configuration du mode prédéfini est activée ;
dans lequel le procédé comprend en outre :
en réponse à la surveillance d'une instruction d'opération représentant la régulation du paramètre d'état, la détermination du dispositif commandé auquel l'instruction d'opération représentant la régulation est destinée, et d'un paramètre d'amplitude au moyen duquel la régulation doit être effectuée sur la base du paramètre d'état ; et
l'envoi du paramètre d'amplitude au dispositif commandé auquel l'instruction d'opération est destinée, et la mise à jour du paramètre d'état dans le mode prédéfini en fonction du paramètre d'amplitude.

2. Procédé selon la revendication 1, comprenant en outre :
en réponse à la surveillance d'une instruction d'opération représentant le réglage du paramètre d'état du dispositif commandé, la détermination du paramètre d'état, indiqué par l'instruction d'opération représentant le réglage, du dispositif commandé dans le mode prédéfini ; et
l'envoi du paramètre d'état déterminé au dispositif commandé, et la définition d'un état de fonctionnement du dispositif commandé.

3. Procédé selon la revendication 1 ou 2, comprenant en outre :
la réception du paramètre d'état qui a été régulé par le dispositif commandé sur la base d'une instruction de régulation pour le dispositif commandé ; et
la mise à jour du paramètre d'état dans le mode prédéfini en fonction d'un paramètre d'état régulé.

4. Procédé de traitement de données, appliqué à un dispositif commandé, le procédé comprenant :
l'acquisition d'un paramètre d'état dans un mode prédéfini, le paramètre d'état étant acquis en réponse à l'activation d'une configuration du mode prédéfini, et le paramètre d'état dans le mode prédéfini étant configuré pour un dispositif de commande pour surveiller une instruction d'opération de sauvegarde du paramètre d'état pour le réglage et la sauvegarde,
dans lequel le paramètre d'état dans le mode prédéfini est mis à jour en fonction d'un paramètre d'amplitude au moyen duquel la régulation doit être effectuée sur la base du paramètre d'état.

5. Procédé selon la revendication 4, comprenant en outre :
la réception du paramètre d'état mis à jour par le dispositif de commande dans le mode prédéfini ; et
la sauvegarde du paramètre d'état mis à jour dans le mode prédéfini.

6. Procédé selon la revendication 4 ou 5, dans lequel l'acquisition du paramètre d'état dans le mode prédéfini comprend :
la réception du paramètre d'état dans le mode prédéfini envoyé par le dispositif de commande ; ou
le rapport d'un paramètre d'état actuel du dispositif commandé, et en réponse à une instruction de confirmation envoyée par le dispositif de commande, la détermination du paramètre d'état actuel en tant que paramètre d'état dans le mode prédéfini.

7. Dispositif de commande, comprenant :
un module de surveillance (101), configuré pour surveiller une instruction d'opération pour un paramètre d'état d'un dispositif commandé ; et
un premier module de détermination (102), configuré pour, en réponse à la surveillance d'une instruction d'opération représentant la sauvegarde du paramètre d'état, déterminer un paramètre d'état actuel du dispositif commandé et sauvegarder le paramètre d'état actuel déterminé en tant que paramètre d'état dans un mode prédéfini ;
dans lequel le dispositif de commande comprend en outre :
un quatrième module de détermination, configuré pour déterminer si une configuration du mode prédéfini est activée ; et
un premier module d'acquisition, configuré pour, à condition que la configuration du mode prédéfini soit activée, acquérir le paramètre d'état du dispositif commandé ;
dans lequel le dispositif de commande comprend en outre :
un troisième module de détermination, configuré pour, en réponse à la surveillance d'une instruction d'opération représentant la régulation du paramètre d'état, déterminer le dispositif commandé auquel l'instruction d'opération représentant la régulation est destinée, et un paramètre d'amplitude au moyen duquel la régulation doit être effectuée sur la base du paramètre d'état ; et
un second module d'envoi, configuré pour envoyer le paramètre d'amplitude au dispositif commandé auquel l'instruction d'opération est destinée, et mettre à jour le paramètre d'état dans le mode prédéfini en fonction du paramètre d'amplitude.

8. Dispositif de commande selon la revendication 7, comprenant en outre :
un second module de détermination, configuré pour, en réponse à la surveillance d'une instruction d'opération représentant le réglage du paramètre d'état du dispositif commandé, déterminer le paramètre d'état, indiqué par l'instruction d'opération représentant le réglage, du dispositif commandé dans le mode prédéfini ; et
un premier module d'envoi, configuré pour envoyer le paramètre d'état déterminé au dispositif commandé et définir un état de fonctionnement du dispositif commandé.

9. Dispositif de commande selon la revendication 7 ou 8, comprenant en outre :
un premier module de réception, configuré pour recevoir le paramètre d'état qui a été régulé par le dispositif commandé sur la base d'une instruction de régulation pour le dispositif commandé ; et
un module de mise à jour, configuré pour mettre à jour le paramètre d'état dans le mode prédéfini en fonction d'un paramètre d'état régulé.

10. Dispositif commandé, comprenant :
un second module d'acquisition (201), configuré pour acquérir un paramètre d'état dans un mode prédéfini, le paramètre d'état étant acquis en réponse à l'activation d'une configuration du mode prédéfini, et le paramètre d'état dans le mode prédéfini étant configuré pour un dispositif de commande pour surveiller une instruction d'opération de sauvegarde du paramètre d'état pour le réglage et la sauvegarde,
dans lequel le paramètre d'état dans le mode prédéfini est mis à jour en fonction d'un paramètre d'amplitude au moyen duquel la régulation doit être effectuée sur la base du paramètre d'état.

11. Dispositif commandé selon la revendication 10, comprenant en outre :
un second module de réception, configuré pour recevoir le paramètre d'état mis à jour par le dispositif de commande dans le mode prédéfini ; et
un module de sauvegarde, configuré pour sauvegarder le paramètre d'état mis à jour dans le mode prédéfini.

12. Dispositif commandé selon la revendication 10 ou 11, dans lequel le second module d'acquisition (201) est spécifiquement configuré pour recevoir le paramètre d'état dans le mode prédéfini envoyé par le dispositif de commande, ou rapporter un paramètre d'état actuel du dispositif commandé et, en réponse à une instruction de confirmation envoyée par le dispositif de commande, déterminer le paramètre d'état actuel en tant que paramètre d'état dans le mode prédéfini.

13. Support de stockage non transitoire lisible par ordinateur, les instructions dans le support de stockage étant exécutées par un processeur d'un ordinateur pour permettre à l'ordinateur d'exécuter le procédé de traitement de données selon l'une quelconque des revendications 1-3 ou 4-6.
